# EUROPEAN PATENT APPLICATION

(11) **EP 3 653 769 A1**
(43) Date of publication of application: **20.05.2020**
(21) Application number: 18832733.2
(22) Date of filing: 26.06.2018
(51) Int. Cl.: D03D 25/00, B29B 15/10, D03D 11/00

(54) **FIBER STRUCTURE AND FIBER-REINFORCED COMPOSITE MATERIAL**

(30) Priority: 13.07.2017 JP 2017137077
(71) Applicant: Kabushiki Kaisha Toyota Jidoshokki, Kariya-shi, Aichi 448-8671 (JP)
(72) Inventor: YOSHIKAWA, Genki, Kariya-shi Aichi 448-8671 (JP)
(74) Representative: TBK
(86) International application number: PCT/JP2018/024173
(87) International publication number: WO 2019/012983

(57) **Abstract**

A fiber structure includes a plurality of fiber layers stacked in a stacking direction and a plurality of binding yarns that bind the fiber layers together in the stacking direction. Each of the binding yarns is engaged with the first fiber bundles that configure two fiber layers located at opposite ends of the fiber structure in the stacking direction. Each first fiber bundle has an engagement portion as a section that is engaged with the binding yarn and a non-engagement portion as a section that is not engaged with the binding yarns. Regarding the engagement portion and the non-engagement portion, the dimension of the non-engagement portion in the stacking direction is greater than the dimension of the engagement portion in the stacking direction.

## Description

### TECHNICAL FIELD

The present invention relates to a fiber structure including multiple fiber layers that are stacked together and multiple binding yarns that bind the fiber layers together and a fiber-reinforced composite material.

Fiber-reinforced composite materials are generally used as light-weight structural materials. Fiber structures may serve as reinforcement base materials for fiber-reinforced composite materials. Fiber-reinforced composite materials having fiber structures impregnated with matrix resin are used as structural materials for aircrafts, vehicles, and architectural structures. Patent Document 1, for example, describes a fiber structure for one such fiber-reinforced composite material.

Fig. 8 shows a three-dimensional woven fabric 90 as a fiber structure disclosed in Patent Document 1. The three-dimensional woven fabric 90 is constituted by in-plane direction yarns 93, that is, multiple warps 91 and wefts 92, and multiple out-of-plane direction yarns 94. The warps 91 constitute multiple fiber layers 91a, and the wefts 92 constitute multiple fiber layers 91b. The three-dimensional woven fabric 90 is formed by stacking the fiber layers 91a and the fiber layers 91b together. The out-of-plane direction yarns 94 are engaged with those of the wefts 92 arranged at the opposite ends of the three-dimensional woven fabric 90 in the stacking direction of the fiber layers 91a, 91b, thus binding the fiber layers 91a, 91b together in the stacking direction.

A three-dimensional fiber-reinforced composite material that uses the three-dimensional woven fabric 90 as a reinforcement base material is constituted by sealing a non-illustrated airtight jig with the three-dimensional woven fabric 90 arranged therein, impregnating the three-dimensional woven fabric 90 with resin, and curing the resin through pressurizing-and heating treatment. The three-dimensional fiber-reinforced composite material is molded such that the opposite end surfaces of the three-dimensional woven fabric 90 in the stacking direction become smooth.

### PRIOR ART DOCUMENT

### Patent Document

Patent Document 1: Japanese Laid-Open Patent Publication No. 8-103960

### SUMMARY OF THE INVENTION

### Problems that the Invention is to Solve

Each of the opposite ends of the three-dimensional woven fabric 90 in the stacking direction has sections in which the out-of-plane direction yarns 94 are engaged with the wefts 92 and sections without such engagement. In the sections in which the out-of-plane direction yarns 94 are engaged with the wefts 92, the out-of-plane direction yarns 94 project with respect to the surface of the fiber layer 91b of the wefts 92 in the stacking direction. As a result, when the three-dimensional woven fabric 90 is pressed inward in the stacking direction by means of the airtight jig, the warps 91 meander, thus lowering the strength of the three-dimensional fiber-reinforced composite material. To limit such lowering of strength in the three-dimensional fiber-reinforced composite material, it is desirable that the meandering of the warps 91 be limited.

Accordingly, it is an objective of the present invention to provide a fiber structure and a fiber-reinforced composite material that limit the lowering of strength.

### Means for Solving the Problems

In accordance with one aspect of the present disclosure, a fiber structure is provided that includes a plurality of fiber layers stacked in a stacking direction, and a plurality of binding yarns that bind the fiber layers together in the stacking direction. The fiber layers include two or more first fiber layers each configured by a plurality of first fiber bundles arranged in a first direction, and a second fiber layer configured by a plurality of second fiber bundles arranged in a second direction perpendicular to the first direction. Each of the binding yarns is engaged with two of the first fiber bundles that are located at opposite ends of the fiber structure in the stacking direction. Those of the first fiber bundles configuring the two of the first fiber layers located at the opposite ends have engagement portions as sections that are engaged with the binding yarns and non-engagement portions as section that are not engaged with the binding yarns. Regarding any pair of an engagement portion and a non-engagement portion that are adjacent to each other in the first direction, the dimension of the non-engagement portion in the stacking direction is greater than the dimension of the engagement portion in the stacking direction.

With this configuration, the difference in dimension between the non-engagement portions and the engagement portions absorbs the dimension of each binding yarn. This decreases projection of the binding yarns with respect to the non-engagement portions, compared to a case in which the engagement portions and the non-engagement portions have equal dimensions. Therefore, even though those of the first fiber bundles configuring the first fiber layers located at the opposite ends of the fiber structure in the stacking direction have the engagement portions, which are engaged with the binding yarns, and the non-engagement portions, which are not engaged with the binding yarns, the meandering of the second fiber bundles caused by the pressure during molding is decreased when such molding is performed such that the opposite end surfaces of the fiber structure in the stacking direction become smooth. This limits the lowering of strength of the second fiber bundles in the yarn-axis direction caused by the aforementioned meandering.

In the fiber structure in accordance with another aspect of the present disclosure, in any pair of an engagement portion and a non-engagement portion that are adjacent to each other in the first direction, the dimension of the non-engagement portion in the stacking direction may be equal to the sum of the dimension of the engagement portion in the stacking direction and the dimension of the binding yarn in the stacking direction.

With this configuration, the pressing amount for the engagement portions and the pressing amount for the non-engagement portions toward the second fiber bundles are equalized when molding is performed such that the opposite end surfaces of the fiber structure in stacking direction become smooth. This decreases the meandering of the second fiber bundles caused by the pressure during molding, thus limiting the lowering of strength of the second fiber bundles in the yarn-axis direction caused by such meandering.

In the fiber structure in accordance with another aspect of the present disclosure, the first fiber bundles that configure the two of the first fiber layers located at the opposite ends may be bulky yarns.

With this configuration, the first fiber bundles are reduced in diameter to bring the fibers configuring each of the first fiber bundles close to one another. This decreases the size of each first fiber bundle, thus forming the engagement portions and increasing the fiber density. In contrast, when the first fiber bundles are in a bulky state without being reduced in diameter, each first fiber bundle has a great size and a low fiber density. Then, at the time of manufacturing the fiber structure, the binding yarns are engaged with the first fiber bundles and thus reduce the diameter of each first fiber bundle, forming the engagement portions. As a result, using the bulky yarn for the first fiber bundles, the engagement portions are formed in the step of binding using the binding yarns. This facilitates the manufacture of the fiber structure.

In the fiber structure in accordance with another aspect of the present disclosure, the first fiber bundles that configure the two of the first fiber layers located at the opposite ends may be slub yarns.

With this configuration, the size of each first fiber bundle is decreased by extending the fibers configuring the first fiber bundle. The engagement portions and the non-engagement portions are formed by adjusting the amount of such extension and thus adjusting the size of the first fiber bundle. As a result, the density of the fibers does not vary greatly between the engagement portions and the non-engagement portions. Also, the strength of each first fiber bundle does not vary greatly in the yarn-axis direction.

In the fiber structure in accordance with another aspect of the present disclosure, each of the binding yarns may be engaged alternately in the first direction with those of the first fiber bundles arranged at a first end of the fiber structure in the stacking direction and those of the first fiber bundles arranged at a second end of the fiber structure in the stacking direction.

A fiber-reinforced composite material in accordance with one aspect of the present disclosure includes the above-described fiber structure and a matrix resin with which the above-described fiber structure is impregnated.

With this configuration, the difference in dimension between the non-engagement portions and the engagement portions absorbs the dimension of each binding yarn. This decreases the amount of projection of the binding yarns with respect to the non-engagement portions, compared to a case in which the engagement portions and the non-engagement portions have equal dimensions. As a result, even though those of the first fiber bundles configuring the first fiber layers arranged on the opposite ends have the engagement portions, which are engaged with the binding yarns, and the non-engagement portions, which are not engaged with the binding yarns, the meandering of the second fiber bundles caused by the pressure during molding is decreased when the molding is performed such that the opposite end surfaces of the fiber structure in the stacking direction become smooth. This limits the lowering of strength of the second fiber bundles in the yarn-axis direction caused by the meandering, thus limiting the lowering of strength of the second fiber bundles in the yarn-axis direction in the fiber-reinforced composite material.

### BRIEF DESCRIPTION OF THE DRAWINGS

Fig. 1 is a perspective view schematically showing a fiber-reinforced composite material according to an embodiment.
Fig. 2 is a plan view showing a fiber structure according to the embodiment.
Fig. 3A is a cross-sectional view taken along line 3-3 of Fig. 1, showing the fiber structure.
Fig. 3B is a cross-sectional view showing an engagement portion of the fiber structure of Fig. 3A.
Fig. 3C is a cross-sectional view showing a non-engagement portion of the fiber structure of Fig. 3A.
Fig. 4 is a cross-sectional view taken along line 4-4 of Fig. 1, showing the fiber structure.
Fig. 5 is a cross-sectional view showing the fiber structure of Fig. 1 in a state arranged in a mold.
Fig. 6A is a cross-sectional view showing a fiber structure according to another embodiment.
Fig. 6B is a cross-sectional view showing an engagement portion of the fiber structure of Fig. 6A.
Fig. 6C is a cross-sectional view showing a non-engagement portion of the fiber structure of Fig. 6A.
Fig. 7 is a cross-sectional view showing a fiber structure according to another embodiment.
Fig. 8 is a diagram showing a conventional three-dimensional woven fabric.

### MODES FOR CARRYING OUT THE INVENTION

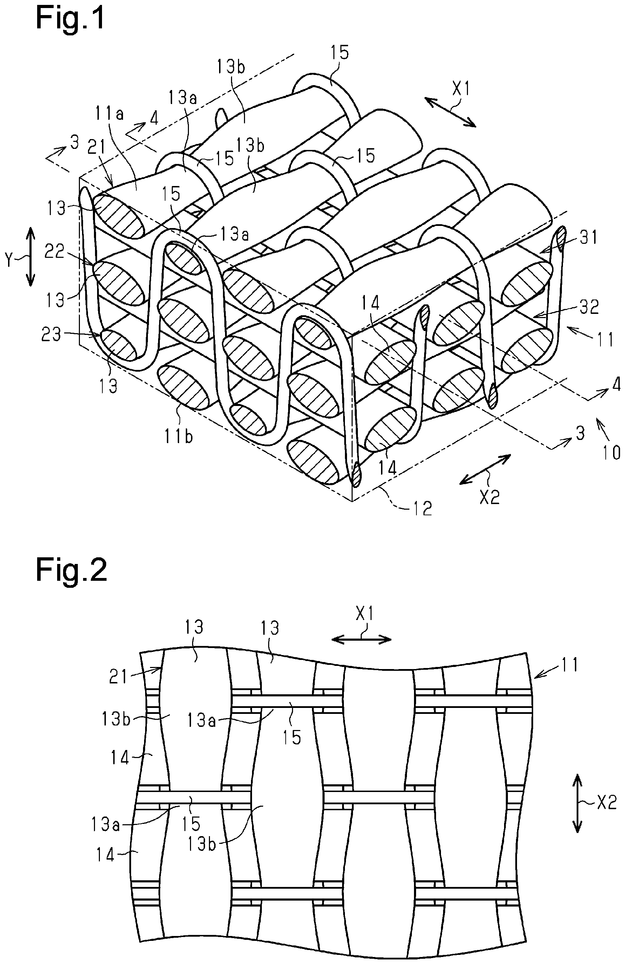

A fiber structure and a fiber-reinforced composite material according to an embodiment will now be described with reference to Figs. 1 to 5.

As shown in Fig. 1, a fiber-reinforced composite material 10 is configured by impregnating a fiber structure 11 serving as a reinforcement base material with a matrix resin 12. The matrix resin 12 may be, for example, epoxy resin, which is a thermosetting resin.

The fiber structure 11 is configured by stacking multiple fiber layers together. The direction in which the fiber layers are stacked together is defined as the stacking direction Y of the fiber structure 11. The fiber structure 11 has multiple wefts 13 as first fiber bundles and multiple warps 14 as second fiber bundles. The fiber structure 11 is a multilayer woven fabric constituted by multilayer weaving. The wefts 13 and the warps 14 extend in mutually perpendicular directions.

The wefts 13 and the warps 14 are fiber bundles each formed by bundling fibers together. The fiber bundles may be configured by organic fibers, inorganic fibers, or mixed fibers. The mixed fibers may be a mixture of different types of organic fibers, a mixture of different types of inorganic fibers, or a mixture of an organic fiber and an inorganic fiber. Types of organic fibers include aramid fiber, poly-p-phenylene-benzo-bis-oxazole fiber, and ultrahigh molecular weight polyethylene fiber. Types of inorganic fibers include carbon fiber, glass fiber, and ceramic fiber.

With reference to Figs. 1, 2, 3A, and 4, the fiber structure 11 includes multiple weft layers as first fiber layers. The weft layers are each constituted by multiple wefts 13 that are arranged parallel to one another in the first direction X1. The weft layers include a first weft layer 21, a second weft layer 22, and a third weft layer 23. The second weft layer 22 is arranged below the first weft layer 21 in the stacking direction Y. The third weft layer 23 is arranged below the second weft layer 22 in the stacking direction Y. The first to third weft layers 21 to 23 are fiber layers configuring the multilayer woven fabric.

The fiber structure 11 also has multiple warp layers as second fiber layers. The warp layers are each constituted by multiple warps 14 that are arranged parallel to one another in the second direction X2. The warp layers have a first warp layer 31 and a second warp layer 32. The second warp layer 32 is arranged below the first warp layer 31 in the stacking direction Y. The first and second warp layers 31, 32 are fiber layers configuring the multilayer woven fabric.

The first weft layer 21, the first warp layer 31, the second weft layer 22, the second warp layer 32, and the third weft layer 23 are stacked together sequentially in this order from a first end to a second end (from the upper end to the lower end) of the fiber structure 11 in the stacking direction Y. The first weft layer 21 and the third weft layer 23 are arranged at the opposite ends of the fiber structure 11 in the stacking direction Y, that is, the first end and the second end, respectively. Multiple binding yarns 15 bind the first weft layer 21, the first warp layer 31, the second weft layer 22, the second warp layer 32, and the third weft layer 23 together in the stacking direction Y.

The binding yarns 15 are arranged parallel to one another in the second direction X2. The binding yarns 15 are employed to maintain the shape of the fiber structure 11 and are fiber bundles. The fiber bundles may each be configured by organic fibers, inorganic fibers, or mixed fibers. The mixed fibers may be a mixture of different types of organic fibers, a mixture of different types of inorganic fibers, or a mixture of an organic fiber and an inorganic fiber. Each of the binding yarns 15 is arranged adjacent to one(s) of the warps 14 in the second direction X2. Each binding yarn 15 is arranged in a manner extending on the outer surfaces of the wefts 13 of the first weft layer 21 as the uppermost layer configuring the fiber structure 11 and then folding back. The binding yarns 15 extend through the fiber structure 11 in the stacking direction Y. Each binding yarn 15 is also arranged in a manner extending on the outer surfaces of the wefts 13 of the third weft layer 23 as the lowermost layer and then folding back. The binding yarns 15 are thus engaged with the wefts 13 of the first weft layer 21 and the third weft layer 23, which are located at the opposite ends in the stacking direction Y.

In the first and third weft layers 21, 23, any two of the binding yarns 15 adjacent to each other in the second direction X2 are engaged with ones of the wefts 13 at positions offset in the first direction X1. Through such engagement of the binding yarns 15 with the wefts 13 configuring the first weft layer 21 and the third weft layer 23, the first to third weft layers 21 to 23 are bound together in the stacking direction. This also binds the first warp layer 31 between the first weft layer 21 and the second weft layer 22 and the second warp layer 32 between the second weft layer 22 and the third weft layer 23.

The fiber structure 11 includes a first end surface 11a and a second end surface 11b in the stacking direction Y. The first end surface 11a is configured by all of the wefts 13 configuring the first weft layer 21 and the sections of the binding yarns 15 that are folded back onto the outer surfaces of the wefts 13 of the first weft layer 21. The second end surface 11b is configured by all of the wefts 13 configuring the third weft layer 23 and the sections of the binding yarns 15 that are folded back onto the outer surfaces of the wefts 13 of the third weft layer 23.

The wefts 13 configuring the first weft layer 21 and the third weft layer 23 each include engagement portions 13a and non-engagement portions 13b. The engagement portions 13a are sections engaged with the binding yarns 15. The non-engagement portions 13b are sections that are not engaged with the binding yarns 15.

Specifically, each weft 13 is a bulky yarn that can be reduced in diameter before being subjected to weaving with the warps 14. The "bulky yarn" herein refers to a yarn having a comparatively low degree of convergence in the fiber bundle such that the yarn can be reduced in diameter by a necessary amount determined in correspondence with the dimension of each binding yarn 15 in the stacking direction Y. To manufacture the yarn, in a case of spinning a fiber bundle with non-continuous fibers, the area of the outlet of the trumpet through which the fiber bundle converges before being introduced into the drafting device should be set greater than normal. In a case of a fiber bundle with continuous fibers, the added amount of a convergence agent (oil agent) for converging the continuous fibers is set smaller than normal. Using these methods, the bulky yarn is manufactured.

The binding yarns 15 are then engaged with the wefts 13 to form the engagement portions 13a and the non-engagement portions 13b in the wefts 13. Specifically, in each of the engagement portions 13a, the fibers configuring the weft 13 are located close to one another. The weft 13 is thus reduced in diameter compared to the non-engagement portions 13b.

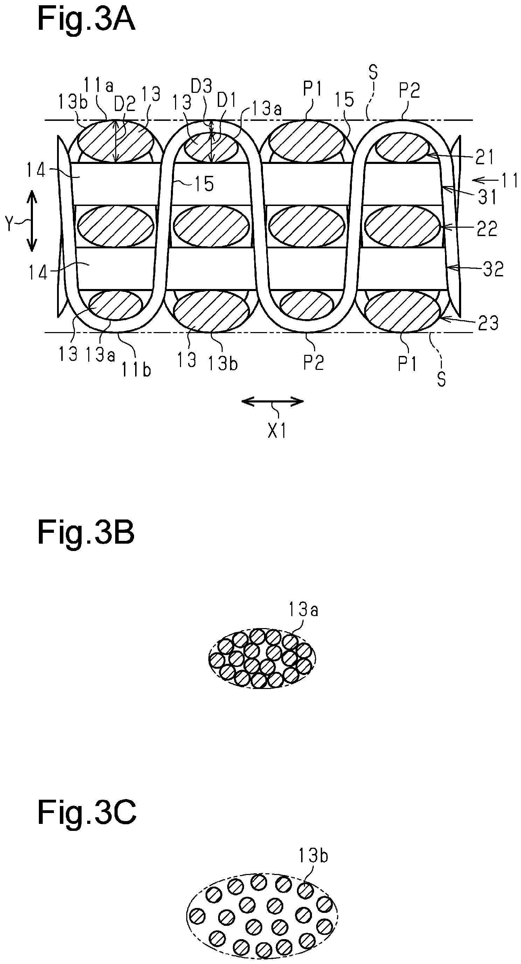

As a result, referring to Figs. 3B and 3C, the size of each engagement portion 13a of the weft 13 is smaller than the size of each non-engagement portion 13b. The fiber density of the engagement portion 13a is higher than the fiber density of the non-engagement portion 13b. The binding yarns 15 are engaged with the wefts 13 to form the engagement portions 13a and the non-engagement portions 13b that are arranged alternately in the second direction X2. Each weft 13 having the engagement portions 13a and the non-engagement portions 13b extends linearly in the yarn-axis direction.

As illustrated in Fig. 3A, if the dimension of each weft 13 in the stacking direction Y is defined as thickness, the thickness D1 of each engagement portion 13a is smaller than the thickness D2 of each non-engagement portion 13b. In other words, the dimension (the thickness D2) of the non-engagement portion 13b is greater (thicker) than the dimension (the thickness D1) of the engagement portion 13a.

The dimension of each binding yarn 15 in the stacking direction Y is the thickness D3. The thickness D2 of each non-engagement portion 13b is the thickness of the thickest section of the non-engagement portion 13b. The engagement portions 13a and the non-engagement portions 13b are in such a relationship that the thickness D2 of each non-engagement portion 13b matches the sum of the thickness D1 of each engagement portion 13a and the thickness D3 of each binding yarn 15. In the present embodiment, the thickness D2 of the non-engagement portion 13b is equal to the sum of the thickness D1 of the engagement portion 13a and the thickness D3 of the binding yarn 15. Specifically, the thickness D1 of the engagement portion 13a, the thickness D2 of the non-engagement portion 13b, and the thickness D3 of the binding yarn 15 slightly vary depending on the manufacturing tolerances or the like. Therefore, as long as the thickness D2 of the non-engagement portion 13b is substantially equal to the sum of the thickness D1 of the engagement portion 13a and the thickness D3 of the binding yarn 15, the thickness D2 may be slightly different from the sum.

The first warp layer 31 is an inner layer with respect to the first weft layer 21 in the stacking direction Y and is adjacent to the first weft layer 21 in the stacking direction Y. The wefts 13 of the first weft layer 21 are overlapped with the first warp layer 31. The second warp layer 32 is an inner layer with respect to the third weft layer 23 in the stacking direction Y and is adjacent to the third weft layer 23 in the stacking direction Y. The wefts 13 of the third weft layer 23 are overlapped with the second warp layer 32. The yarn axes of the warps 14 configuring the first warp layer 31 and the second warp layer 32 all extend linearly. The thickness D2 of each non-engagement portion 13b is equal to the sum of the thickness D1 of each engagement portion 13a and the thickness D3 of each binding yarn 15. Therefore, the peaks P1 of the non-engagement portions 13b and the peaks P2 of the binding yarns 15 located at the same end of the fiber structure 11 in the stacking direction Y are located at a single imaginary plane S, that is, either the first end surface 11a or the second end surface 11b.

The fiber structure 11, which is configured in the above-described manner, is impregnated with the matrix resin 12 and then subjected to curing to obtain the fiber-reinforced composite material 10. Examples of molding methods for molding the fiber-reinforced composite material 10 include, for example, the resin transfer molding (RTM) method and a hot press molding method. By impregnating the fiber structure 11 with the matrix resin 12 and then curing the matrix resin 12, the wefts 13 and the warps 14 of the fiber structure 11 are caused to form a composite with the matrix resin 12. The fiber-reinforced composite material 10 is used as, for example, an outer board of a movable body such as an aircraft or a vehicle.

Next, a method of manufacturing the fiber-reinforced composite material 10 will be described, together with the operation thereof.

Using a non-illustrated loom, the first to third weft layers 21 to 23 are formed with the wefts 13, and the first and second warp layers 31, 32 are formed with the warps 14. The first to third weft layers 21 to 23 are then bound together by the binding yarns 15 in the stacking direction Y. In the step of binding using the binding yarns 15, the binding yarns 15 are engaged with those of the wefts 13 configuring the first weft layer 21 and the third weft layer 23. This reduces the diameter of each weft 13, which is bulky, in the sections that are engaged with the binding yarns 15, that is, the engagement portions 13a. The sections that are not engaged with the binding yarns 15 correspond to the non-engagement portions 13b. The thickness of each non-engagement portion 13b is greater than the thickness of each engagement portion 13a.

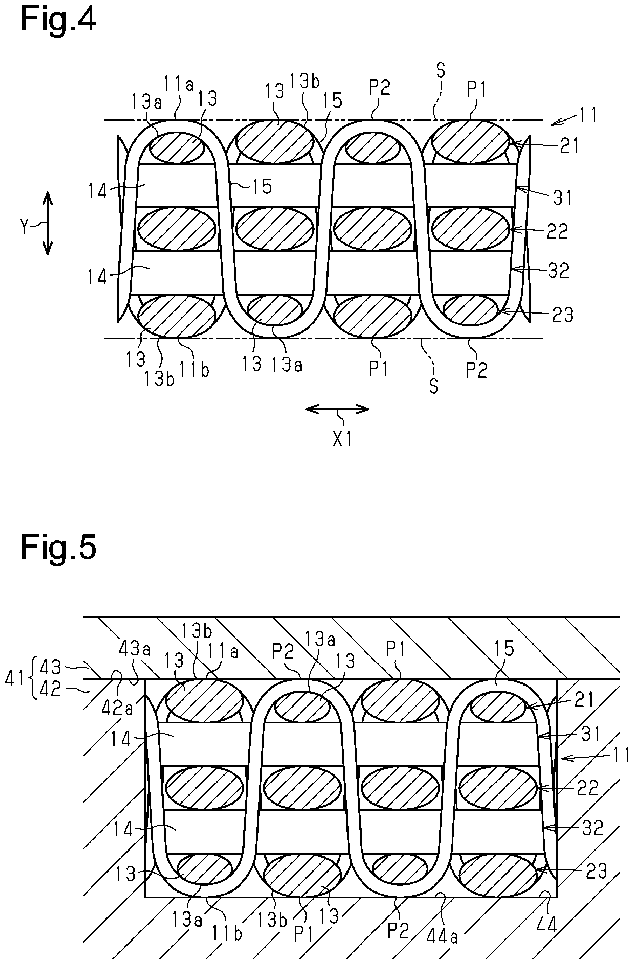

As shown in Fig. 5, a mold 41 includes a lower die 42 and an upper die 43. The lower die 42 includes a cavity 44 shaped in correspondence with the shape of the fiber-reinforced composite material 10 as a molding target. The depth of the cavity 44 is smaller than the dimension of the fiber structure 11 in the stacking direction Y. As a result, when an inner bottom surface 44a of the cavity 44 supports the fiber structure 11, the first end surface 11a of the fiber structure 11 projects from an upper surface 42a of the lower die 42.

The upper die 43 has a non-illustrated inlet port and a non-illustrated outlet port. The inlet and outlet ports communicate with the cavity 44 when the mold is closed. One of the opposite ends of the inlet port opens in the cavity 44, while the other is connected to a non-illustrated resin infusion device. One of the opposite ends of the outlet port opens in the cavity 44, while the other is connected to a non-illustrated depressurizing pump.

While maintaining the mold 41 in an open state, the fiber structure 11 is arranged in the cavity 44, that is, in the mold 41. At this time, the fiber structure 11 is arranged in the cavity 44 such that the first end surface 11a (the first weft layer 21) configures the upper surface. The second end surface 11b is supported by the inner bottom surface 44a of the cavity 44, with the peaks P2 of the binding yarns 15 and the peaks P1 of the non-engagement portions 13b held in contact with the inner bottom surface 44a.

Subsequently, the mold is closed until in the cavity 44 is sealed. At this time, the peaks P2 of the binding yarns 15 and the peaks P1 of the non-engagement portions 13b simultaneously contact a lower surface 43a of the upper die 43. The binding yarns 15 and the non-engagement portions 13b are thus pressed inward in the stacking direction Y. This compresses the fiber structure 11 in the stacking direction Y. The first end surface 11a is thus molded to become smooth by the lower surface 43a of the upper die 43. The second end surface 11b is molded to become smooth by the inner bottom surface 44a of the cavity 44.

Next, the mold 41 is heated. The depressurizing pump is then actuated to depressurize the interior of the cavity 44 substantially to a vacuum state. Subsequently, with the interior of the cavity 44 maintained in the depressurized state, thermosetting resin as the material of the matrix resin 12 is infused into the cavity 44 from the inlet port, which is connected to the resin infusion device. The fiber structure 11 is thus impregnated with the thermosetting resin in the cavity 44. The thermosetting resin gradually fills the cavity 44 from its bottom. The mold 41 is heated continuously until the thermosetting resin is completely cured. When curing is complete, the thermosetting resin forms the matrix resin 12. Afterwards, the mold 41 is opened to remove the fiber-reinforced composite material 10 from inside the mold 41.

The above-described embodiment has the following advantages.
(1) In the wefts 13 configuring the first weft layer 21 and the third weft layer 23, the thickness D2 of each non-engagement portion 13b is greater than the thickness D1 of each engagement portion 13a. As a result, even though the binding yarns 15 are engaged with the wefts 13 configuring the first weft layer 21 and the third weft layer 23 and thus form the engagement portions 13a and the non-engagement portions 13b, the difference between the thickness D2 of each non-engagement portion 13b and the thickness D1 of each engagement portion 13a absorbs the thickness of each binding yarn 15. The binding yarns 15 are thus maintained without projecting with respect to the non-engagement portions 13b. Therefore, when the first end surface 11a and the second end surface 11b are molded to become smooth, the meandering of the warps 14 caused by the pressure during such molding is decreased. As a result, even though the fiber-reinforced composite material 10 includes the binding yarns 15, the lowering of strength in the first direction X1 is limited.
(2) In the wefts 13 configuring the first weft layer 21 and the third weft layer 23, the thickness D2 of each non-engagement portion 13b matches the sum of the thickness D1 of each engagement portion 13a and the thickness D3 of each binding yarn 15. Therefore, even though the binding yarns 15 are engaged with the wefts 13 configuring the first weft layer 21 and the third weft layer 23 and thus form the engagement portions 13a and the non-engagement portions 13b, the pressing amount for the engagement portions 13a and the pressing amount for the non-engagement portions 13b with respect to the warps 14 are equalized when the first end surface 11a and the second end surface 11b are molded to become smooth. This decreases the meandering of the warps 14 caused by the pressure during such molding, thus maintaining the yarn axes of the warps 14 in the linearly extending states. As a result, even though the fiber-reinforced composite material 10 includes the binding yarns 15, the lowering of strength in the first direction X1 is limited.
(3) Bulky yarns that are reduced in diameter when engaged with the binding yarns 15 are used as the wefts 13. As a result, the engagement portions 13a are formed through the engagement between the wefts 13 and the binding yarns 15 and, in the sections that are not engaged with the binding yarns 15, the non-engagement portions 13b are formed. The engagement portions 13a and the non-engagement portions 13b are thus formed in the step of binding using the binding yarns 15, which facilitates the manufacture of the fiber structure 11.

The above illustrated embodiment may be modified as follows.

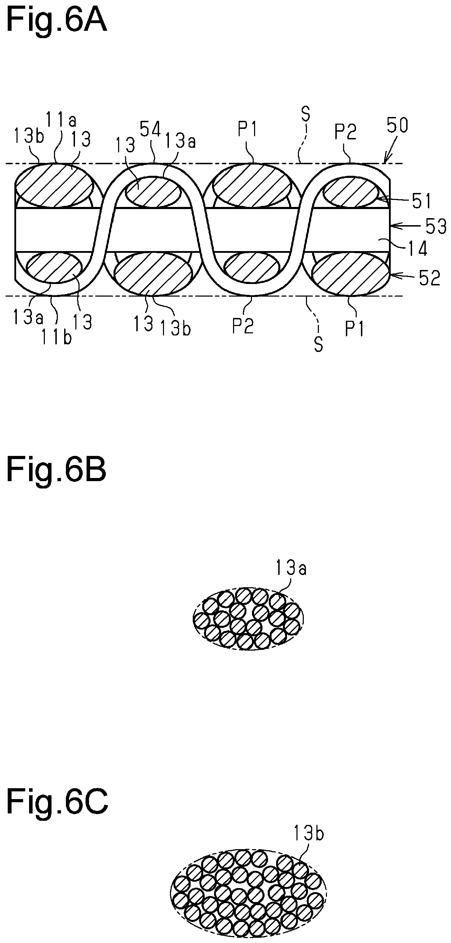

The numbers of the weft layers and warp layers may be changed as needed. For example, with reference to Fig. 6A, a fiber structure 50 may have a first weft layer 51 at a first end in the stacking direction Y, a second weft layer 52 at a second end in the stacking direction Y, and a single warp layer 53 between the first weft layer 51 and the second weft layer 52. In this case, binding yarns 54 are engaged with the wefts 13 configuring the first weft layer 51 and the second weft layer 52.

Specifically, as shown in Figs. 6B and 6C, slub yarns may be used as the wefts 13 configuring the first weft layer 51 and the second weft layer 52. The wefts 13 in this case each have an equal (uniform) fiber density in the yarn-axis direction but include the engagement portions 13a and the non-engagement portions 13b. The engagement portions 13a and the non-engagement portions 13b are formed by extending a fiber bundle with a uniform size in a direction using a drafting device having multiple roller sets at an alternately changing draft ratio such that the fiber bundle has an alternately changing size in the yarn-axis direction. Each weft 13 is thus caused to have different numbers of fibers between the engagement portions 13a and the non-engagement portions 13b. That is, the number of fibers is smaller in each engagement portion 13a than in each non-engagement portion 13b. As a result, the fiber density does not vary greatly between the engagement portions 13a and the non-engagement portions 13b, and the strength does not vary greatly in the yarn-axis direction of each weft 13.

The binding yarns 15 are engaged with the wefts 13 of the first weft layer 21 located at the first end in the stacking direction Y and the wefts 13 of the third weft layer 23 located at the second end in the stacking direction Y. However, the invention is not restricted to this.

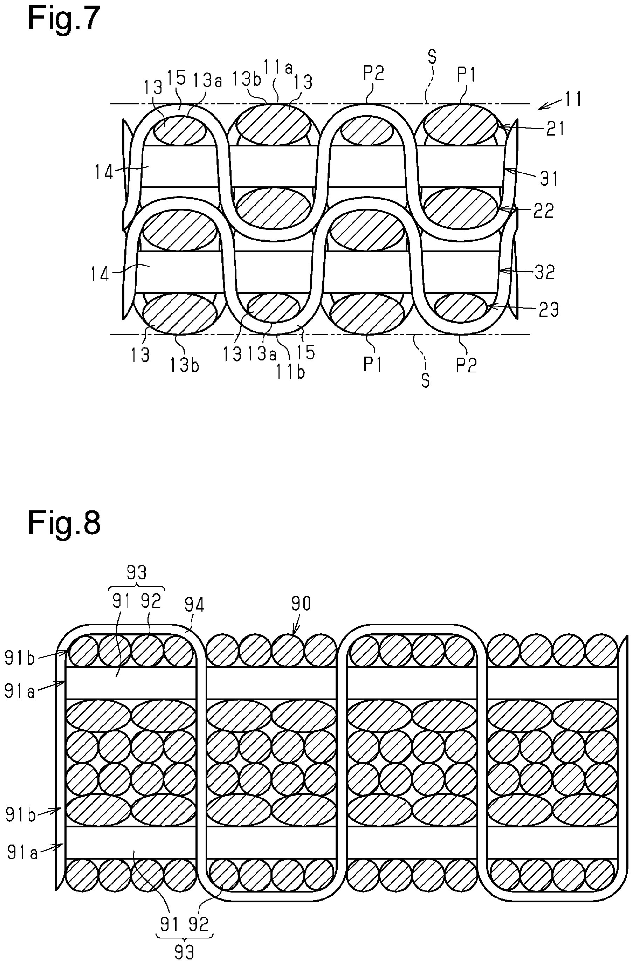

For example, as shown in Fig. 7, the binding yarns 15 may be disposed mutually offset in the stacking direction Y. In this manner, some of the binding yarns 15 are engaged with the wefts 13 of the first weft layer 21 and the wefts 13 of the second weft layer 22. The rest of the binding yarns 15 are engaged with the wefts 13 of the second weft layer 22 and the wefts 13 of the third weft layer 23.

The binding yarns 15, 54 are engaged with the wefts 13 located at the first end in the stacking direction and the wefts 13 located at the second end in the stacking direction alternately in the first direction X1. However, the binding yarns 15, 54 may be engaged at intervals of two or more of the wefts 13.

The first fiber bundles may be the warps 14 and the second fiber bundles may be the wefts 13.

The matrix resin 12 does not necessarily have to be epoxy resin but may be, for example, thermosetting resin such as vinyl ester resin, unsaturated polyester resin, and phenolic resin, or may be thermoplastic resin such as polyamide, polybutylene terephthalate, polycarbonate, polyethylene, polypropylene, polyimide resin, and ABS resin.

In the wefts 13 of the first weft layer 21 and the third weft layer 23, the sum of the thickness D1 of each engagement portion 13a and the thickness D3 of each binding yarn 15 does not necessarily have to matches the thickness D2 of each non-engagement portion 13b. For example, as long as the thickness D2 of the non-engagement portion 13b is greater than the thickness D1 of the engagement portion 13a, the thickness D3 of the binding yarn 15 may be either greater or smaller than that in the embodiment. This configuration decreases the meandering of the warps 14 caused by the pressure during molding, compared to a case in which the thickness D2 of the non-engagement portion 13b is equal to the thickness D1 of the engagement portion 13a. As a result, even though the fiber-reinforced composite material 10 includes the binding yarns 15, the lowering of strength in the first direction X1 is limited.

## Claims

1. A fiber structure comprising:
a plurality of fiber layers stacked in a stacking direction; and
a plurality of binding yarns that bind the fiber layers together in the stacking direction, wherein
the fiber layers include
two or more first fiber layers each configured by a plurality of first fiber bundles arranged in a first direction, and
a second fiber layer configured by a plurality of second fiber bundles arranged in a second direction perpendicular to the first direction,
each of the binding yarns is engaged with two of the first fiber bundles that are located at opposite ends of the fiber structure in the stacking direction,
those of the first fiber bundles configuring the two of the first fiber layers located at the opposite ends have engagement portions as sections that are engaged with the binding yarns and non-engagement portions as section that are not engaged with the binding yarns, and
regarding any pair of an engagement portion and a non-engagement portion that are adjacent to each other in the first direction, the dimension of the non-engagement portion in the stacking direction is greater than the dimension of the engagement portion in the stacking direction.

2. The fiber structure according to claim 1, wherein, in any pair of an engagement portion and a non-engagement portion that are adjacent to each other in the first direction, the dimension of the non-engagement portion in the stacking direction is equal to the sum of the dimension of the engagement portion in the stacking direction and the dimension of the binding yarn in the stacking direction.

3. The fiber structure according to claim 1 or 2, wherein the first fiber bundles that configure the two of the first fiber layers located at the opposite ends are bulky yarns.

4. The fiber structure according to claim 1 or 2, wherein the first fiber bundles that configure the two of the first fiber layers located at the opposite ends are slub yarns.

5. The fiber structure according to any one of claims 1 to 4, wherein each of the binding yarns is engaged alternately in the first direction with those of the first fiber bundles arranged at a first end of the fiber structure in the stacking direction and those of the first fiber bundles arranged at a second end of the fiber structure in the stacking direction.

6. A fiber-reinforced composite material comprising:
the fiber structure according to any one of claims 1 to 5; and:
a matrix resin with which the fiber structure is impregnated.
